(19) Europäisches Patentamt
European Patent Office
Office européen des brevets

(11) **EP 2 053 733 A1**

(12) **EUROPÄISCHE PATENTANMELDUNG**

(43) Veröffentlichungstag:
29.04.2009 Patentblatt 2009/18

(51) Int Cl.:
*H02P 1/30* (2006.01)          *H02P 27/04* (2006.01)
*F04B 9/06* (2006.01)

(21) Anmeldenummer: 07119311.4

(22) Anmeldetag: 25.10.2007

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Linde AG**
**80807 München (DE)**

(72) Erfinder: **Haas, Sebastian**
**81377 München (DE)**

(74) Vertreter: **Charles, Glyndwr**
**Reinhard, Skuhra, Weise & Partner GbR**
**Patent- und Rechtsanwälte**
**Friedrichstrasse 31**
**80801 München (DE)**

(54) **Verfahren zum Ansteuern eines Asynchronmotors und Pumpenanordnung mit Asynchronmotor**

(57)    Verfahren zum Ansteuern eines mit einer einstellbaren Drehstromfrequenz betriebenen Asynchronmotors (2, 3, 4) auf eine vorgegebene Zieldrehzahl (nz), wobei zum Regeln des Asynchronmotors (2, 3, 4) in einen Betriebsbereich um seinen Kipppunkt (Mk) in vorgegebenen Zeitabständen eine aktuelle Drehzahl (nakt) des Asynchronmotors (2, 3, 4) ermittelt wird und die Drehstromfrequenz (nsyn) derart schrittweise angepasst wird, dass die aktuelle Drehzahl (nakt) innerhalb einer vorgegebenen maximalen Drehzahlabweichung ($\Delta$n) von einer aktualisierten Drehstromfrequenz (nsyn1) liegt.

Fig. 4

**Beschreibung**

Die vorliegende Erfindung betrifft ein Verfahren zum Ansteuern eines asynchronen Motors, wie er beispielsweise in Pumpen eingesetzt wird. Die Erfindung betrifft ferner eine Anordnung mit einer oder mehreren Pumpen zum Bereitstellen von druckbeaufschlagter kryogener Flüssigkeit, wobei sich die Anordnung beispielsweise zum Einsatz in einer Luftverflüssigungsanlage eignet.

Die Ansteuerung und Regelung von Elektromotoren und insbesondere Asynchronmotoren, die mit Drehstrom betrieben werden, ist in vielfältigen Anwendungsbereichen notwendig. Entsprechende Elektromotoren können beispielsweise zum Antrieb von Pumpen eingesetzt werden. Häufig werden kryogene Pumpen, also Pumpen, die kryogene Flüssigkeiten bei Temperaturen von kleiner als -170°C mit entsprechenden Drehstromasynchronmaschinen betrieben. Insbesondere bei Tieftemperaturanwendungen, wie beispielsweise Luftzerlegungsanlagen wird eine kryogene Flüssigkeit wie beispielsweise verflüssigte Luft durch kryogene Pumpen auf einen vorgegebenen Betriebsdruck gebracht und dann zum Beispiel weiteren Anlageteilen, wie zum Beispiel einem Wärmetauscher, zugeführt.

Um einen möglichst zuverlässigen und gleichmäßigen Druck in der kryogenen Flüssigkeit aufrecht zu erhalten, werden meist redundante Pumpen parallel eingesetzt, um beim Ausfall einer der Pumpen dennoch den notwendigen Druck im Tieftemperatursystem aufrecht zu erhalten. Zum Beispiel können redundante Pumpenpaare vorgesehen werden, bei denen eine Betriebspumpe ständig im Einsatz ist und bei deren Ausfall eine Ersatzpumpe anspringt und die ausgefallene Pumpenleistung ersetzt. Für derartige Ersatzpumpen sind so genannte Slow-Roll-Betriebsmodi bekannt, in denen der Antriebsmotor zwar aktiv ist, die Pumpe jedoch praktisch keine Förderarbeit leistet.

Damit beim Ausfall der Betriebspumpe der Druck im Hochdruckbereich der entsprechenden Anlage nicht zu stark absinkt, ist es notwendig, die redundante Ersatzpumpe möglichst schnell in einen Betriebszustand zu bringen, der dem ursprünglichen Betriebszustand der Betriebspumpe entspricht. D.h. in der Regel muss die Drehzahl der Ersatzpumpe möglichst schnell die Drehzahl der ausgefallenen Betriebspumpe erreichen. Üblicherweise ist die Drehzahl der jeweiligen Pumpe, die Förderarbeit leistet, durch Betriebsvorgaben der jeweiligen Anlage bestimmt und wird in einem Regelkreis eingestellt. Die Drehzahl eines Asynchronmotors ist im Wesentlichen durch die Drehstromfrequenz vorgegeben, mit der er betrieben wird. Bei konventionellen Regelungen wird daher ein Frequenzwandler eingesetzt, der die Drehstromfrequenz für den die Pumpe antreibenden Motor bereitstellt. Eine entsprechende Regeleinrichtung setzt in Abhängigkeit von dem Druck des pumpenausgangsseitig vorliegenden Produktes die Drehstromfrequenz für die Pumpen- bzw. Asynchronmotoren fest.

Fällt eine Pumpe aus, wird dieser gesetzte Frequenzwert auch für die Ersatzpumpe verwendet. Bei einer entsprechenden konventionellen Regelung ergibt sich nachteilig, dass die neu anspringende Ersatzpumpe nur ein schwaches Drehmoment entwickelt und daher der Hochlaufvorgang für die Ersatzpumpe verzögert wird, wodurch Druck- und Mengenschwankungen in dem gelieferten Produkt auftreten.

Es ist daher eine Aufgabe der vorliegenden Erfindung, ein verbessertes Verfahren zum Hochfahren von Pumpen oder Asynchronmotoren bereitzustellen.

Diese Aufgabe wird durch ein Verfahren gemäß Patentanspruch 1 gelöst.

Demgemäß ist ein Verfahren zum Ansteuern eines mit einer einstellbaren Drehstromfrequenz betriebenen Asynchronmotors auf eine vorgegebene Zieldrehzahl angegeben. Dabei wird zum Regeln des Asynchronmotors in einen Betriebsbereich um seinen Kipppunkt in vorgegebenen Zeitabständen eine aktuelle Drehzahl des Asynchronmotors ermittelt. Die Drehstromfrequenz wird ferner derart schrittweise angepasst, dass die aktuelle Drehzahl innerhalb einer vorgegebenen maximalen Drehzahlabweichung von einer aktualisierten Drehstromfrequenz liegt.

Der Kipppunkt eines Asynchronmotors entspricht in einer Drehmoment-Drehzahl-Kennlinie des Motors, der sogenannten Kippdrehzahl, die einem Maximum an Drehmoment des Motors entspricht. Bei dem vorgeschlagenen Verfahren wird ausgenutzt, dass in der Nähe des Kipppunktes das Motordrehmoment am größten ist und sich daher beim Hochfahren eine größere Winkelbeschleunigung ergibt. Damit wird die Hochfahrzeit bis zum Erreichen der gewünschten Drehzahl reduziert. Durch eine vorgegebene maximale Drehzahlabweichung wird gewährleistet, dass während des Hochfahrvorgangs, also bis zum Erreichen der Zieldrehzahl, der Asynchronmotor einen Betriebspunkt aufweist, der maximal um die maximale Drehzahlabweichung um sein Kippmoment bzw. seine Kippdrehzahl variiert. Das Verfahren eignet sich insbesondere in Betriebssituationen, in denen eine übergeordnete Regelung einen Sprung in der Synchrondrehzahl bzw. Drehstromfrequenz vorgibt, der den Betriebspunkt des Motors in seinem Drehzahl-Drehmoment-Diagramm von dem jeweiligen Kippmoment wegführen würde. Dies kann zum Beispiel beim Hochfahren des Asynchronmotors der Fall sein, aber auch, wenn aufgrund anderer Umstände eine Drehzahlerhöhung innerhalb kurzer zeit notwendig ist.

Vorzugsweise wird bei dem Verfahren einer oder mehrere der folgenden Verfahrensschritte durchgeführt:

Festlegen einer maximalen Drehzahlabweichung derart, dass für alle Synchrondrehzahlen die maximale Drehzahlabweichung die Differenz zwischen einer Synchrondrehzahl und der der Synchrondrehzahl entsprechenden Kippdrehzahl gemäß einer Drehmomentdrehzahlkennlinie des Asynchronmotors umfasst. Dadurch wird eine Schrittweite für die Erhöhung der Drehstromfrequenz beim Hochfahren des Asynchronmotors auf die Zieldrehzahl vorgegeben. Da die maximale Drehzahlabweichung so gewählt ist, dass die Kippdrehzahl innerhalb des Intervalls zwischen der Synchrondrehzahl, also der aktuell eingestellten Drehstromfrequenz, abzüglich der maximalen Drehzahlabweichung liegt, ergibt sich vorteilhaft immer ein Betriebspunkt in der Nähe des Kipppunktes des Asynchronmotors.

Festlegen einer zieldrehzahl. Die Zieldrehzahl kann beispielsweise der Drehzahl entsprechen, mit der ein ausgefallener Asynchronmotor bzw. eine ausgefallene Pumpe betrieben wurde.

Betreiben des Asynchronmotors mit einer Drehstromfrequenz, welche der zieldrehzahl entspricht. Bei üblichen Regelkreisen ist die Drehzahl meist in Abhängigkeit des sich ausgangsseitig von der jeweiligen Pumpenanordnung ergebenden Flüssigkeitsdrucks eingestellt.

Ermitteln der aktuellen Drehzahl des Asynchronmotors. Die aktuelle Drehzahl des Asynchronmotors ergibt sich aus der Drehstromfrequenz mit der der Asynchronmotor aktuell betrieben wird und den Strömungsverhältnissen, also mittelbar aus den sich ergebenden hydraulischen Momenten in dem Pumpen- und/oder Leitungssystem. Das hydraulische Moment ergibt sich aus dem Volumenstrom, dem Differenzdruck zwischen Eingangs- und Ausgangsseite der Pumpe und der aktuellen Drehzahl. Die aktuelle Drehzahl kann zum Beispiel direkt an einer Welle der Pumpe oder des Motors gemessen werden oder auf indirekte Weise ermittelt werden.

Aktualisieren der Drehstromfrequenz auf eine aktualisierte Drehstromfrequenz, welche der aktuellen um die maximale Drehzahlabweichung erhöhte Drehzahl entspricht, falls die aktuelle Drehzahl geringer ist als die Zieldrehzahl und insbesondere geringer ist als die Zieldrehzahl abzüglich der maximalen Drehzahlabweichung. Es kann demnach eine schrittweise Erhöhung der Drehstromfrequenz derart erfolgen, dass der Asynchronmotor in der Nähe seines Kipppunktes betrieben wird und daher ein großes Drehmoment entwickelt. Dadurch ergibt sich während dieser Hochfahrphase eine besonders hohe Winkelbeschleunigung, wodurch die Zieldrehzahl insgesamt schnell erreicht wird.

Vorzugsweise ist die maximale Drehzahlabweichung für alle Drehzahlen geringer als die Differenz zwischen der Kippdrehzahl und der Synchrondrehzahl des Asynchronmotors. Man kann zum Beispiel annehmen, dass durch Änderung der Synchrondrehzahl die Drehmoment-Drehzahl-Kennlinie des vorliegenden Asynchronmotors lediglich auf der X-Achse, also mit der Drehzahl verschoben wird. Die Anforderungen an die maximale Drehzahlabweichung sind dann über alle Synchrondrehzahlen bzw. Drehstromfrequenzen erfüllt.

In einer Variante des Verfahrens wird die aktuelle Drehzahl des Asynchronmotors in Abhängigkeit von einer Stromaufnahme des Asynchronmotors bestimmt.

Während in vielen Regelkreisen der Stromverbrauch einzelner Anlagenteile, wie beispielsweise eines Asynchronmotors abgreifbar sind, kann die Messung oder Ermittlung einer Drehzahl an einer Welle manchmal nur aufwendig realisiert werden. In der Regel kann jedoch die aktuelle Drehzahl durch eine Abschätzung anhand einer Drehzahl-Stromaufnahme-Kennlinie des Asynchronmotors abgeschätzt werden. Insofern ist keine direkte Messung der Drehzahl notwendig, was eine Implementierung des Verfahrens erleichtert.

Zum Beispiel kann das Anpassen der Drehstromfrequenz dann durch Regeln der Stromaufnahme des Asynchronmotors erfolgen. Dabei entspricht die zuvor erläuterte maximale Drehzahlabweichung einer maximalen Stromaufnahmeabweichung. Prinzipiell ist eine Abbildung der Drehzahl-Drehmoment-Kennlinie auch auf eine Drehzahl-Stromaufnahme-Kennlinie möglich, so dass bei der entsprechenden Regelung der Stromaufnahme, die bei der maximalen Drehzahlabweichung entsprechende maximale Stromaufnahmeabweichung verwendet wird. Die Stromaufnahme steigt in der Regel mit der Abweichung von der Synchrondrehzahl, dass heißt es kann eine charakteristische Stromaufnahme im Kipppunkt des Asynchronmotors bestimmt werden. Bei der Synchrondrehzahl verbraucht der Motor eine minimalen bis verschwindenden Strom. Die Stromregelung erfolgt somit derart, dass die Stromaufnahme in einem vorgebbaren Bereich liegt, der einer maximal gewünschten Stromaufnahme entspricht. Falls die Stromaufnahme höher ist, arbeitet der Motor deutlich links von seinem Kipppunkt in der entsprechenden Drehzahl-Drehmoment-Kennlinie. Dann wird die Drehstromfrequenz in Richtung zu der Stromaufnahme, welche dem Kipppunkt entspricht, verändert. Dadurch wird gewährleistet, dass der Asynchronmotor in der Nähe seines Kipppunktes betrieben wird.

Die Erfindung betrifft ferner eine Pumpenanordnung mit mindestens einer Betriebspumpe, mindestens einer Ersatzpumpe, welche einen Asynchronmotor und einen Frequenzwandler zum Bereitstellen eines Drehstroms aufweist und einer Steuereinrichtung, welche zum Regeln des Asynchronmotors der Ersatzpumpe auf eine zieldrehzahl ein vorbeschriebenes Verfahren durchführt.

Wie bereits eingangs erwähnt wurde, eignen sich Asynchronmotoren insbesondere zum Betrieb von Kreiselpumpen, die kryogene Flüssigkeiten fördern bzw. verdichten. In einem Anwendungsfall entspricht die Zieldrehzahl zum Beispiel einer aktuellen Drehzahl der Betriebspumpe bzw. der Drehzahl vor dem Ausfall einer Betriebspumpe. Die Steuereinrichtung kann somit derart ausgestaltet sein, dass bei Ausfall einer Betriebspumpe die Ersatzpumpe aktiviert wird und auf die Drehzahl der ausgefallenen Betriebspumpe gebracht wird.

Gemäß einer Weiterbildung der Erfindung ist eine Vorrichtung zum Bereitstellen von druckbeaufschlagten kryogenen Flüssigkeiten vorgesehen, die eine entsprechende Pumpenanordnung aufweist. Dabei beaufschlagen kryogene Pumpen als Betriebs- und Ersatzpumpen aus einem Reservoir vorgehaltene kryogene Flüssigkeit mit einem vorgegebenen Druck. Die Steuereinrichtung regelt dabei ferner eine Drehzahl der Betriebspumpe in Abhängigkeit von dem vorgegebenen Druck.

Dies ist beispielsweise ein Anwendungsfall in Tieftemperatur-Luftzerlegungsanlagen, bei denen einer oder mehreren Wärmetauschereinrichtungen als kryogene Flüssigkeit mit dem vorgegebenen Druck beaufschlagte verflüssigte Luft zugeführt wird.

In einer Variante der Erfindung ist ein Computerprogrammprodukt vorgesehen, welches die Durchführung eines entsprechenden Verfahrens zum Ansteuern eines Asynchronmotors auf einer programmgesteuerten Rechner- oder Steuereinrichtung veranlasst. Als programmgesteuerte Rechner- oder Steuereinrichtung kommt zum Beispiel ein PC oder ein Rechner einer Leitwarte zur Steuerung und Regelung von Anlagen in Frage, auf dem entsprechende Software installiert ist. Das Computerprogrammprodukt kann beispielsweise in der Art eines Datenträgers wie zum Beispiel USB-Stick, Floppy-Disk, CD-ROM, DVD implementiert werden oder auch auf einer Servereinrichtung als herunterladbare Programmdatei implementiert sein.

Weitere vorteilhafte Ausgestaltungen der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Es zeigt dabei:

Fig. 1 : eine Darstellung einer Anlage mit mehreren steuerbaren Pumpen zum Bereitstellen einer druckbeaufschlagten kryogenen Flüssigkeit;

Fig. 2: eine schematische Darstellung einer Ausführungsform einer Pumpe;

Fig. 3: eine Drehmoment-Drehzahl-Kennlinie eines Asynchronmotors;

Fig. 4: mehrere Drehmoment-Drehzahl-Kennlinien von Asynchronmotoren zur Veranschaulichung einer Variante des Verfahrens zum Ansteuern eines Asynchronmotors;

Fig. 5: eine Darstellung von Regelungsschritten gemäß einer Variante des Verfahrens für eine Anlage gemäß Fig. 1; und

Fig. 6: eine Stromaufnahme-Drehzahl-Kennlinie eines Asynchronmotors.

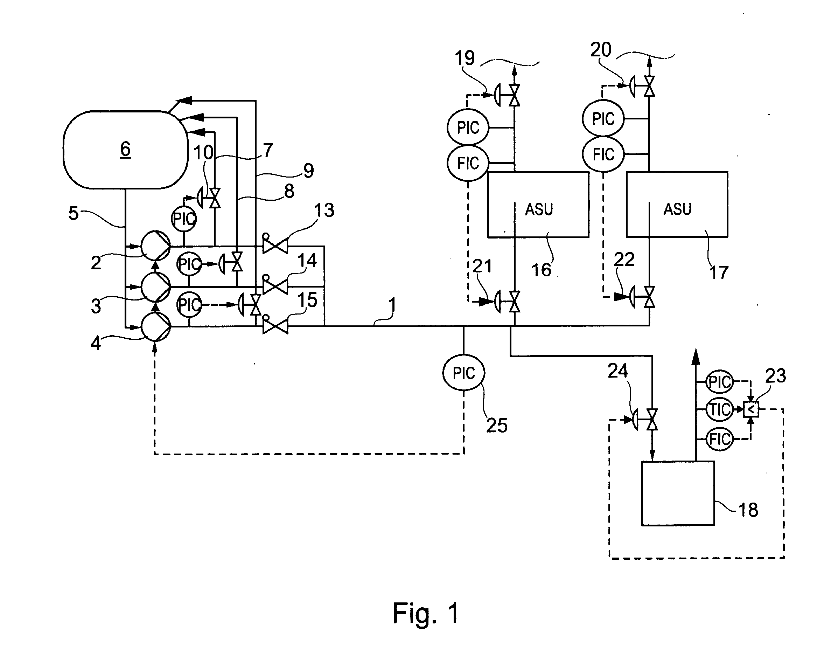

Bei Luftzerlegungsanlagen mit Innenverdichtung wird zum Beispiel kryogene Luft oder Flüssigkeiten (LIN, LOX, LAR = flüssiger Stickstoff, Sauerstoff, Argon) durch Pumpen oder Verdichten auf einen Betriebsdruck gebracht und einem Wärmetauscher der entsprechenden Luftzerlegungsanlage (ASU = Air Seperation Unit) zugeführt. Die entsprechende kryogene Flüssigkeit wird dann darin verdampft. Um beim Ausfall einer der Pumpen dennoch den jeweiligen Prozess weiterführen zu können, sind redundante Pumpen vorgesehen, die beim Ausfall der eigentlichen Betriebspumpe als Ersatzpumpe einspringen. Es ist auch denkbar, dass von einem gemeinsamen Reservoir oder Tank mehrere einzelne Anlagenteile mit kryogener Flüssigkeit unter Druck beliefert werden. Dies ist zum Beispiel in der Figur 1 schematisch dargestellt.

Es ist eine gemeinsame Hochdruckflüssigleitung 1 vorgesehen, die von drei Pumpen 2, 3, 4 mit Hochdruckflüssigkeit versorgt wird. Die Pumpen beziehen das jeweilige Produkt über eine Zuleitung 5 von einem gemeinsamen Reservoir oder Tank 6. Für jede Pumpe ist ein Bypass-Rücklauf 7, 8, 9 mit jeweils einem druckgesteuerten Ventil 10, 11, 12 vorgesehen. Jede Pumpe 2, 3, 4 ist ferner über ein Rückschlagventil 13, 14, 15 gegenüber der gemeinsamen Hochdruckflüssigleitung gesichert.

An die gemeinsame Hochdruckflüssigleitung 1 sind in dem Beispiel der Figur 1 drei Anlagenteile angekoppelt. Beispielsweise sind zwei Wärmetauscher 16, 17 von Luftzerlegungsanlagen und ein Back-Up-System 18 an die gemeinsame Hochdruckflüssigkeitsleitung 1 gekoppelt. Gasseitig wird dabei jeweils der Produktdruck über druckgesteuerte Ventile 19, 20 geregelt. Die jeweils erforderliche Produktmenge wird ebenfalls über Ventile 21, 22 gesteuert. Ähnlich erfolgt eine Entnahme von Hochdruckflüssigkeit aus der gemeinsamen Leitung 1 durch das Back-Up-System 18 über ein von einem Regler 23 gesteuertes Ventil 24.

Über eine Steuereinrichtung 25 wird der erforderliche Druck durch Ansteuerung der Pumpen 2, 3, 4 in der gemeinsamen Hochdruckleitung 1 geregelt. Im Normalbetrieb sind dabei die Pumpen-Bypässe 7, 8, 9 geschlossen, und für die Pumpen bzw. die darin eingesetzten Asynchronmotoren ist eine geeignete Drehstromfrequenz vorgegeben. In der Regel entspricht die Anzahl der vorgehaltenen Pumpen 2, 3, 4 der Anzahl der aus der gemeinsamen Hochdruckleitung 1 entnehmenden Teilanlagen.

Falls eine Pumpe ausfällt, muss eine redundante Ersatzpumpe möglichst schnell hochfahren, um die Druckschwankungen in der gemeinsamen Flüssigleitung 1 zu minimieren. Im Normalbetrieb gibt der Regler oder die Steuereinrichtung 25 an die Pumpen eine vorgegebene Drehstromfrequenz nsyn.

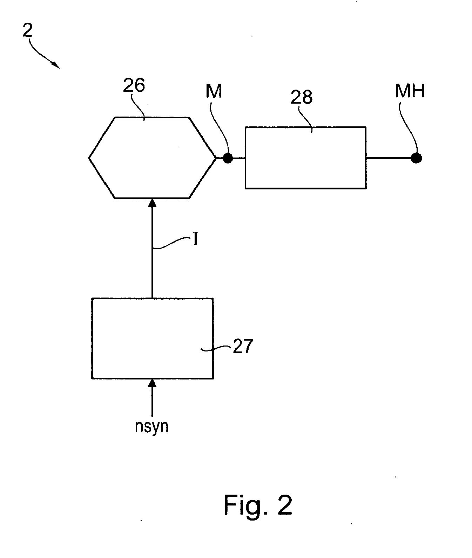

Die Figur 2 zeigt schematisch einen möglichen Aufbau einer Pumpe. Ein Asynchronmotor 26 liefert in Abhängigkeit von einem zugeführten Drehstrom I mit einer vorgegebenen Drehstromfrequenz ein Motormoment M, welches über Laufräder 28 einer entsprechenden Kreiselpumpe 2 ein hydraulisches Moment MH erzeugt. Die Drehstromfrequenz bzw. der Drehstrom I kann von einem steuerbaren Frequenzwandler 27 geliefert werden, dem von dem Druckregler 25 die notwendige Drehstromfrequenz nsyn mitgeteilt wird.

In der Figur 1 entsprechen die Symbole der Verdichter oder Pumpen 2, 3, 4 jeweils einer Anordnung mit Frequenzwandler, Asynchronmotor und den Laufrädern der Pumpe. Häufig werden sogenannte Kreiselpumpen eingesetzt. Der Druckregler 25 gibt dann die jeweilige Drehstromfrequenz vor. Die Kreisel oder Laufräder 28 weisen ein Massenträgheitsmoment $\Theta$ auf. Es ergibt sich aus dem Drallsatz die Bewegungsgleichung für ein rotierende Masse zu:

$$\frac{\partial L}{\partial t} = \Theta \quad \dot{\omega} = M - MH \ .$$

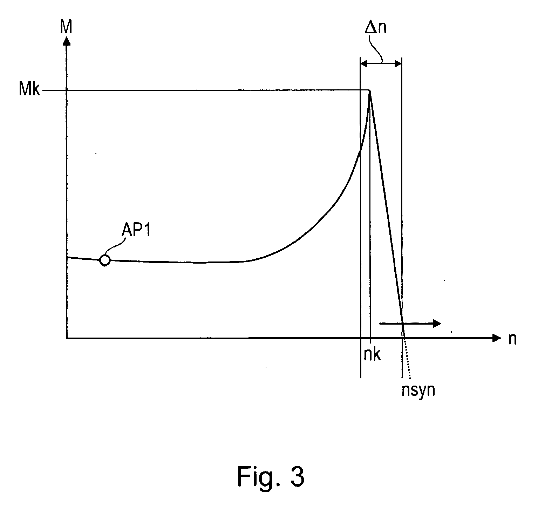

In der Figur 3 ist eine Motorkennlinie als Drehmoment M in Abhängigkeit der Motordrehzahl n dargestellt. Die beispielhafte Kennlinie in der Figur 3 entspricht einem Asynchronmotor. Asynchronmotoren sind auch als Drehstromasynchronmaschine, Induktionsmaschine oder Kurzschlussläufermotor bekannt. Die Drehzahl n entspricht dabei der Drehfrequenz in Einheiten von Umdrehungen pro Zeiteinheit, wie beispielsweise Umdrehungen oder Polungswechsel pro Sekunde oder Minute. Die Drehmoment-Drehzahl-Kennlinie beschreibt wie der Motor auf einen Drehmoment bzw. Lastmoment reagiert, das man von seiner Welle abverlangt. Ist das verlangte Moment kleiner als das Drehmoment M des Motors beschleunigt der Motor und die Drehzahl n steigt. Steigende Kennlinienteile sind dabei instabil, fallende stabil.

Das Drehmoment M eines Asynchronmotors hat ein Maximum MK bei der Kippfrequenz nk. Dreht sich der Läufer des Motors, also der Rotor mit derselben Geschwindigkeit wie das durch den Drehstrom erzeugte Magnetfeld, liefert der Motor kein Drehmoment. Dies ist bei der Synchrondrehzahl nsyn der Fall. Ein besonders hohes Drehmoment und damit gemäß dem Drallsatz eine starke Beschleunigung $\omega$ der Winkelgeschwindigkeit $\omega$ der Motorachse ergibt sich in der Nähe des Kipppunktes MK, nk.

Gemäß der Regelung in der Figur 1 wird den Pumpen bzw. Asynchronmotoren 2, 3, 4 allen dieselbe Drehstromfrequenz eingekoppelt. D.h. wenn eine Pumpe aktiviert wird und auf eine Zieldrehzahl gebracht werden muss, wobei die Zieldrehzahl in der Regel der Drehzahl der im Betrieb befindlichen Pumpen entspricht oder der letzten Drehzahl der ausgefallenen Pumpe, wird die Ersatzpumpe in einem Betriebspunkt AP1 beginnen, der nur ein niedriges Motordrehmoment M aufweist. Ein Hochfahren und Erreichen der Zieldrehzahl ist damit nur langsam möglich. In der Figur 3 ist ferner eine maximale Drehzahlabweichung $\Delta n$ angegeben, die derart gewählt ist, dass der Kipppunkt MK, nk innerhalb eines Drehzahlbereiches liegt, der zwischen nsyn - $\Delta n$ und n liegt.

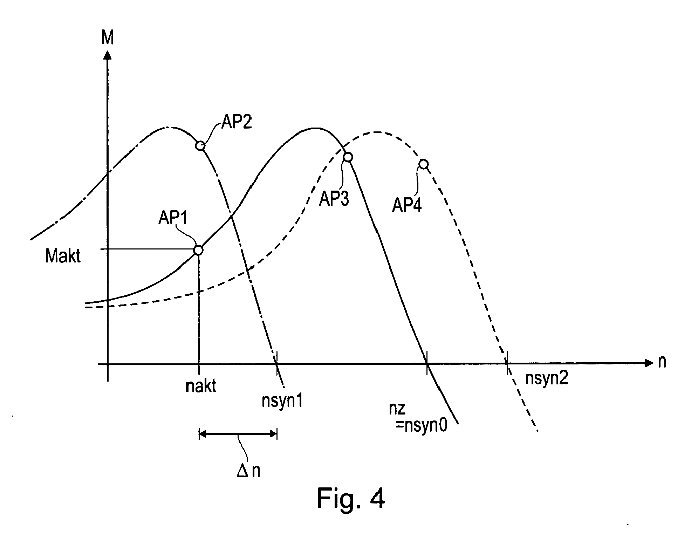

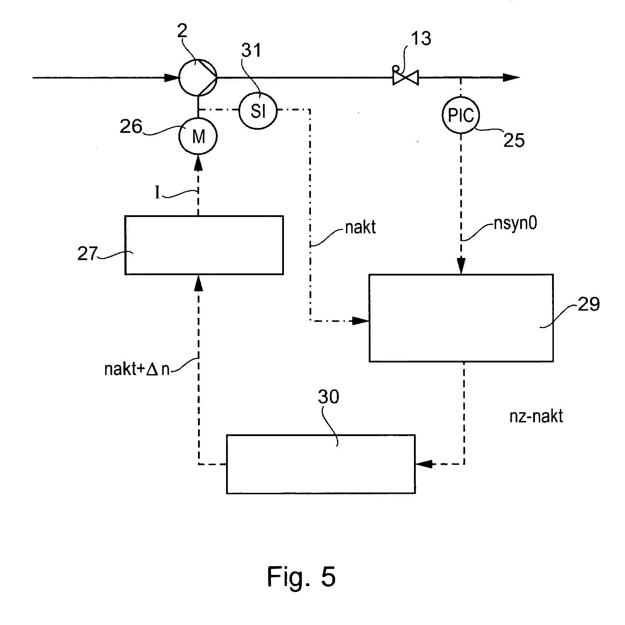

Nach der im Folgenden beschriebenen Variante des erfindungsgemäßen Verfahrens zum Ansteuern eines Asynchronmotors wird erreicht, dass eine besonders große Beschleunigung des Pumpenrades erzielt wird, und ein möglichst großes Drehmoment durch den Motor gewährleistet ist. Dies ist in den Figuren 4 und 5 näher erläutert. Es ist beispielsweise notwendig, in einer Anlage, wie sie in der Figur 1 beschrieben ist, eine Ersatzpumpe, beispielsweise die Pumpe 2, hochzufahren, weil die Pumpe 3 oder 4 ausgefallen ist. Zum Beispiel kann im Normalbetrieb der notwendige Druck durch zwei Betriebspumpen 3, 4 gewährleistet werden. Wegen des Ausfalls einer Pumpe liefert der Regler 25 zum Aufrechterhalten des benötigten Drucks in der Leitung 1 eine Drehzahl bzw. Frequenz für den Drehstrom, welche höher ist als der letzte Wert für die Drehstromfrequenz der ausgefallenen Pumpe 3. Bei einer konventionellen Regelung erhielte die Ersatzpumpe 2 diesen höheren Drehfrequenzwert von dem Druckregler 25. Beim Hochfahren befindet sich die neu einzuschaltende Ersatzpumpe 2 jedoch in einem anderen Betriebszustand. Ziel ist es, die Ersatzpumpe 2 schnellstmöglich auf die Zieldrehzahl nz = nsyn0, welche der letzten Drehzahl der ausgefallenen Pumpe 3 entsprechen kann, zu bringen. Jedoch ist es auch möglich, dass aufgrund des Anlagenbetriebs der Druckregler 25 eine andere Zieldrehzahl an seinem Ausgang vorschlägt, auf die die Ersatzpumpe schnellstmöglich gebracht werden soll.

In einem ersten Schritt wird der Ersatzpumpe 2 somit die Zieldrehzahl nz = nsyn0 als Drehstromfrequenz eingekoppelt. Die sich ergebende Drehmoment-Drehzahl-Kennlinie ist in der Figur 4 als durchgezogene Kurve dargestellt. Gleichzeitig wird die aktuelle Drehzahl nakt der Ersatzpumpe 4 ermittelt. Insbesondere zu Beginn des Hochfahrvorgangs wird diese Drehzahl in einem deutlich niedrigeren Bereich als die zieldrehzahl nz liegen. In der Figur 4 ist beispielsweise eine aktuelle Drehzahl nakt angegeben. In Kenntnis der Drehmoment-Drehzahl-Kennlinie des jeweiligen Motors der Pumpe 2 ergibt sich ein Drehmoment Makt, das deutlich niedriger ist als das zugehörige Kippmoment Mk. Die aktuelle Drehzahl nakt der Ersatzpumpe 2 kann durch gängige Messungen erfolgen, zum Beispiel optisch, induktiv oder kapazitiv.

In Kenntnis der aktuellen Drehzahl nakt kann in einem Folgeschritt die Drehstromfrequenz aktualisiert werden. Dies erfolgt vorzugsweise derart, dass die aktuell gemessene Drehzahl in einen Betriebsbereich fällt, in dem der der jeweiligen Synchrondrehzahl nsyn1 entsprechende Kipppunkt vorliegt. Es wird nun beispielsweise eine aktualisierte Drehstromfrequenz verwendet, die um maximal $\Delta n$, also um die maximale Drehzahlabweichung von nakt abweicht. Es wird somit eine aktualisierte Drehstromfrequenz eingestellt, die einer aktualisierten Synchrondrehzahl nsyn1 entspricht. Die entsprechende Kennlinie ist in der Figur 4 gestrichpunktet angegeben.

Durch das verschieben der Kennlinie auf die neue aktualisierte Drehstromfrequenz nsyn1 ergibt sich nun ein weitaus günstigerer Betriebspunkt AP2 des Asynchronmotors. Somit wird ein deutlich höheres Drehmoment erzielt, und gemäß dem Drallsatz wird die Drehfrequenz bzw. Drehzahl beschleunigt.

Nach einem vorgegebenen Zeitschritt kann die Aktualisierung der Synchrondrehzahl wiederholt werden. Der jeweilige Betriebspunkt liegt vorzugsweise immer geringfügig rechts des Kipppunktes. Somit ergibt sich schrittweise eine Erhöhung der Drehstromfrequenz mit der der Ersatzmotor bzw. die Ersatzpumpe betrieben wird. Wird die Aktualisierung schrittweise in Schritten von $\Delta n$ vorgenommen, erreicht die Ersatzpumpe bzw. der Ersatzsynchronmotor auf die schnellste Weise den in der Figur 4 als durchgezogene Kennlinie dargestellten Betriebspunkt AP3. Dieser kann zum Beispiel dem Betriebspunkt und der Synchrondrehzahl entsprechen, welche die ausgefallene Betriebspumpe hatte. Es ist damit gewährleistet, dass beim Hochfahren der Ersatzpumpe dieselbe praktisch immer in der Nähe ihres Kipppunktes betrieben wird und daher besonders schnell die Zieldrehzahl nz erreicht. Um die Zieldrehzahl nz mit bestmöglichem Drehmoment zu erreichen, kann ferner, wie anhand der gestrichelten Kurve dargestellt ist, eine Synchrondrehzahl nsyn2 bzw. eine Drehstromfrequenz eingestellt werden, die einen Betriebspunkt AP4 der Pumpe liefert, welcher bei der Zieldrehzahl nz ein Drehmoment rechts des Kipppunktes entwickelt. Vorzugsweise ist die dem Betriebspunkt AP4 ensprechende Drehzahl maximal um eine maximale Drehzahlabweichung $\Delta n$ von der Kippdrehzahl in Richtung zu der Synchrondrehzahl verschoben.

Die Figur 5 zeigt eine Darstellung der Regelungsschritte anhand eines Ausschnitts der in Figur 1 gezeigten Anlage, welcher die Ersatzpumpe 2, den Pumpenantrieb bzw. Asynchronmotor 26, das Rückschlagventil 13 und den Druckregler 25 betrifft. Ein Frequenzkonverter 27 liefert den Drehstrom I an den Asynchronmotor 26. Wie zuvor beschrieben, erfolgt zu vorgegebenen Zeitpunkten, beispielsweise getaktet mit einer Taktfrequenz, welche durch einen Leitwartenrechner vorgeben ist, eine Abfrage 29 der aktuellen Drehzahl nakt des Synchronmotors 26. Die aktuelle Drehzahl nakt kann zum Beispiel durch einen optionalen Geschwindigkeitsoder Drehzahlmesser 31 geliefert werden. Es ist auch möglich, wie es im Folgenden erläutert ist, die Drehzahl nakt von einer Stromaufnahme abzuleiten.

Durch eine geeignete Vergleichseinrichtung 29, beispielsweise implementiert in der Art einer Routine eines Ablaufprogramms für einen Leitstellenrechner, wird festgestellt, ob der Reglerausgang des Druckreglers 25 eine höhere Drehzahl nsyn0 vorschlägt als die aktuelle Drehzahl nakt. In einer Abfrageeinrichtung 30, welche ebenfalls computerimplementiert sein kann, wird ermittelt ob die Differenz zwischen der tatsächlichen aktuellen Drehzahl nakt und der vom Regler 25 vorgegebenen Drehzahl nsyn0 größer ist als die zuvor erläuterte maximale Drehzahlabweichung $\Delta n$. Falls dies der Fall ist, wird dem Frequenzwandler 27 die aktuelle um einen Schritt $\Delta n$ erhöhte Drehstromfrequenz nakt + $\Delta n$ übergeben. Ansonsten wird der von dem Druckregler 25 gelieferte Drehzahlwert verwendet.

Damit ist in einer Anlage, die druckbeaufschlagte kryogene Flüssigkeit, wie zum Beispiel verflüssigte Luft in einem gemeinsamen Leitungsstrang für mehrere Anlagenteile bereitstellt, gewährleistet, dass auch beim Ausfall einer Betriebspumpe der erforderliche Druck und die Menge an kryogener verdichteter Flüssigkeit bereitsteht. Die Druck- und Produktmengenschwankungen beim Ausfall von Pumpen werden damit erheblich herabgesetzt.

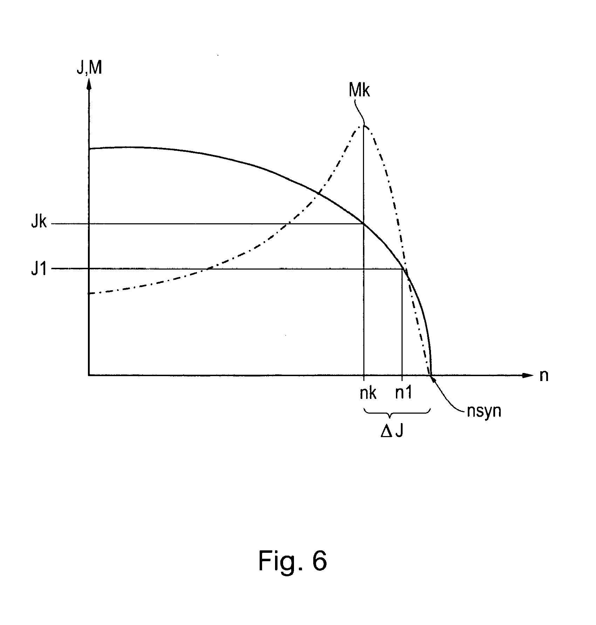

Alternativ zur direkten Ermittlung der aktuellen Drehzahl der hochzufahrenden Ersatzpumpe ist eine indirekte Bestimmung auch in Abhängigkeit von der aufgenommenen Strommenge der Pumpe möglich. In der Figur 6 ist ein beispielhaftes Stromaufnahme-Drehzahl-Diagramm für eine Asynchronmaschine dargestellt. Die Stromaufnahme J ist über der Drehzahl n aufgetragen. Gestrichpunktet ist in demselben Diagramm die korrespondierende Drehmoment-Drehzahl-Kennlinie dargestellt. Läuft die Pumpe mit der Synchrondrehzahl nsyn wird praktisch kein Strom verbraucht, was in der Figur 6 durch den Pfeil dargestellt ist. Entsprechende Strom-Drehzahl-Kennlinien sind in der Regel bekannt. Es kann daher eine maximale Stromaufnahme Jk bestimmt werden, die der Stromaufnahme im Kipppunkt Mk bei der Kippdrehzahl nk entspricht. Ist beispielsweise eine Stromaufnahme J1 gemessen, ergibt sich daraus eine Drehzahl n1 bei der entsprechenden Synchrondrehzahl nsyn. Durch eine Begrenzung der Stromaufnahme auf einen maximalen Wert Jmax $\approx$ Jk ist ebenfalls erreichbar, dass der Betriebspunkt des Asynchronmotors nicht links von seinem Kipppunkt in der entsprechenden Drehmoment-Drehzahl-Kennlinie betrieben wird und daher ein maximales Drehmoment anliegt.

Insofern ist die leicht zugängliche Messung der Stromaufnahme J der einzelnen Pumpen eine Möglichkeit die Drehzahl abzuschätzen. Da häufig zum Beispiel bei kryogenen Pumpen eine Messung der Drehzahl nicht standardmäßig vorgesehen ist, lassen sich durch die indirekte Bestimmung der Drehzahl über die Stromaufnahme weitere Kosten sparen.

Darüber hinaus lässt sich durch Abbilden der Stromaufnahme auf die Drehzahl oder umgekehrt, eine maximale Stromaufnahmeabweichung $\Delta J$ definieren, die der maximalen Drehzahlabweichung $\Delta n$ entspricht. Insofern ergibt sich bei einer Abbildung der Stromaufnahme-Drehzahl-Kennlinien auf ein Drehmoment-Drehzahl-Kennfeld eine weitere Möglichkeit, schrittweise in Form von Stromaufnahmeschritten, beim Hochfahren die Pumpe immer in der Nähe ihres Kipppunktes zu betreiben. Dies ist insbesondere dann von Vorteil, wenn anlagensteuerungsseitig die Drehzahlen der eingesetzten Pumpen über deren Stromaufnahme geregelt sind.

Ein Vorteil der vorgeschlagenen Ansteuerung von Asynchronmotoren, insbesondere als Antriebe für kryogene Pumpen, besteht ferner darin, dass eine übergeordnete Regelung der Drehzahl, wie sie beispielsweise durch den Druckregler 25 in der Figur 1 vorgegeben wird, unbeeinflusst ist. Für den Fall, dass sich eine zu große Abweichung der aktuellen Drehzahl von der Synchrondrehzahl, die der Druckregler 25 vorgibt, wird dessen Ausgangswert, der dem jeweiligen Frequenzwandler 27 (Figur 2) übergeben wird, überschrieben, so dass ein schrittweises Anpassen der Drehstromfrequenz bis zum Erreichen der notwendigen, vom Druckregler 25 vorgegebene Drehzahl erreicht wird.

Obwohl die vorliegende Erfindung anhand bevorzugter Ausführungsbeispiele insbesondere in Bezug auf kryogene Pumpen beschrieben wurde, ist sie nicht darauf beschränkt, sondern vielfältig modifizierbar. Das Betreiben eines Asynchronmotors durch schrittweises Anheben der Drehstromfrequenz lässt sich auch in anderen Anwendungsbereichen einsetzen, bei denen Asynchronmotoren gestartet werden. Ferner ist der Einsatz des Verfahrens nicht auf Pumpenanordnungen beschränkt, die in Luftzerlegungsanlagen oder Gasverflüssigungsanlagen Anwendung finden. Insbesondere lassen sich die vorgeschlagenen Verfahrensschritte innerhalb einer Regelung oder auf einem Leitwartenrechnern der entsprechenden (Industrie-)Anlage implementieren.

**Patentansprüche**

1. Verfahren zum Ansteuern eines mit einer einstellbaren Drehstromfrequenz betriebenen Asynchronmotors (2, 3, 4) auf eine vorgegebene Zieldrehzahl (nz), wobei zum Regeln des Asynchronmotors (2, 3, 4) in einen Betriebsbereich um seinen Kipppunkt (Mk) in vorgegebenen Zeitabständen eine aktuelle Drehzahl (nakt) des Asynchronmotors (2, 3, 4) ermittelt wird und die Drehstromfrequenz (nsyn) derart schrittweise angepasst wird, dass die aktuelle Drehzahl (nakt) innerhalb einer vorgegebenen maximalen Drehzahlabweichung ($\Delta$n) von einer aktualisierten Drehstromfrequenz (nsyn1) liegt.

2. Verfahren nach Anspruch 1, wobei die folgenden Verfahrensschritte durchgeführt werden:

   - Festlegen einer maximalen Drehzahlabweichung ($\Delta$n) derart, dass für alle Synchrondrehzahlen (nsyn) die maximale Drehzahlabweichung ($\Delta$n) die Differenz zwischen einer Synchrondrehzahl (nsyn) und der der Synchrondrehzahl (nsyn) entsprechenden Kippdrehzahl (nk) gemäß einer Drehmoment-Drehzahl-Kennlinie des Asynchronmotors (2, 3, 4) umfasst;
   - Festlegen einer zieldrehzahl (nz);
   - Betreiben des Asynchronmotors (2, 3, 4) mit einer Drehstromfrequenz (nsyn0), welche der Zieldrehzahl entspricht;

   - Ermitteln der aktuellen Drehzahl (nakt) des Asynchronmotors (2, 3, 4); und
   - Aktualisieren der Drehstromfrequenz auf eine aktualisierte Drehstromfrequenz (nsyn1), welche der aktuellen, um die maximale Drehzahlabweichung ($\Delta$n) erhöhte, Drehzahl (nakt) entspricht, falls die aktuelle Drehzahl (nakt) geringer ist als die um die maximale Drehzahlabweichung ($\Delta$n) reduzierte Zieldrehzahl (nz).

3. Verfahren nach Anspruch 1 oder 2, wobei die maximale Drehzahlabweichung ($\Delta$n) für alle Drehzahlen geringer ist als die Differenz zwischen der Kippdrehzahl (nk) und der Synchrondrehzahl (nsyn) des Asynchronmotors (2, 3, 4).

4. Verfahren nach einem der Ansprüche 1 - 3, wobei die aktuelle Drehzahl (nakt) des Asynchronmotors (2, 3, 4) in Abhängigkeit von einer Stromaufnahme (J) des Asynchronmotors (2, 3, 4) bestimmt wird.

5. verfahren nach einem der Ansprüche 1 - 3, wobei dass Anpassen der Drehstromfrequenz durch Regeln der Stromaufnahme (J) des Asynchronmotors (2, 3, 4) erfolgt und die maximale Drehzahlabweichung ($\Delta$n) einer maximalen Stromaufnahmeabweichung entspricht.

6. Pumpenanordnung mit mindestens einer Betriebspumpe (3, 4), mindestens einer Ersatzpumpe (2), welche einen Asynchronmotor (26) und einen Frequenzwandler (27) zum Bereitstellen eines Drehstroms (I) aufweist, und einer Steuereinrichtung, welche zum Regeln des Asynchronmotors (26) der Ersatzpumpe (2) auf eine Zieldrehzahl (nz) ein Verfahren nach einem der vorherigen Ansprüche durchführt.

7. Pumpenanordnung nach Anspruch 6, wobei die Zieldrehzahl (nz) einer aktuellen Drehstromfrequenz einer mit einem Asynchronmotor betriebenen Betriebspumpe entspricht.

8. Pumpenanordnung nach Anspruch 6 oder 7, wobei die Steuereinrichtung derart ausgestaltet ist, dass bei Ausfall einer Betriebspumpe (3, 4) die Ersatzpumpe (2) aktiviert wird und auf die Drehzahl der ausgefallenen Betriebspumpe gebracht wird.

9. Vorrichtung zum Bereitstellen von druckbeaufschlagter kryogener Flüssigkeit, mit einer Pumpenanordnung (2, 3, 4) nach Anspruch 7 oder 8, wobei kryogene Pumpen (2, 3, 4) als Betriebs- und Ersatzpumpen aus einem Reservoir (6) vorgehaltene kryogene Flüssigkeit mit einem vorgegebenen Druck beaufschlagen und wobei die Steuereinrichtung (25) ferner eine Drehzahl der Betriebspumpe in Abhängigkeit von dem vorgegebenen Druck regelt.

**10.** Vorrichtung zur Tieftemperatur-Luftzerlegung mit einer Vorrichtung nach Anspruch 9 und mindestens einer Wärmetauschereinrichtung (16, 17), welcher als kryogene Flüssigkeit mit dem vorgegebenen Druck beaufschlagte verflüssigte Luft zugeführt ist.

Fig. 1

EP 2 053 733 A1

Fig. 2

Fig. 3

Fig. 4

Fig. 5

Fig. 6

**Europäisches Patentamt**

## EUROPÄISCHER RECHERCHENBERICHT

Nummer der Anmeldung

EP 07 11 9311

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 91/03869 A (BORAL JOHNS PERRY IND PTY LTD [AU]) 21. März 1991 (1991-03-21) | 1 | INV. H02P1/30 |
| Y | * Zusammenfassung; Abbildungen 1,7 * * Seite 6, Zeile 17 - Seite 8, Zeile 6 * * Seite 13, Zeile 9 - Zeile 33 * ----- | 4,6 | H02P27/04 F04B9/06 |
| Y | JP 62 171492 A (HITACHI LTD) 28. Juli 1987 (1987-07-28) * Zusammenfassung; Abbildung 1 * ----- | 4 | |
| Y | US 5 629 598 A (WILKERSON ALAN W [US]) 13. Mai 1997 (1997-05-13) * Zusammenfassung; Abbildungen 1,3 * * Spalte 1, Zeile 48 - Spalte 2, Zeile 39 * ----- | 6 | |
| A | US 3 753 002 A (JACOBSON E ET AL) 14. August 1973 (1973-08-14) * Zusammenfassung; Abbildung 2 * ----- | 1,6 | |

**RECHERCHIERTE SACHGEBIETE (IPC)**

H02P
F04B

Der vorliegende Recherchenbericht wurde für alle Patentansprüche erstellt

| Recherchenort | Abschlußdatum der Recherche | Prüfer |
|---|---|---|
| München | 16. April 2008 | Hascher, Thierry |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 07 11 9311

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-04-2008

| Im Recherchenbericht angeführtes Patentdokument | Datum der Veröffentlichung | Mitglied(er) der Patentfamilie | | Datum der Veröffentlichung |
|---|---|---|---|---|
| WO 9103869 A | 21-03-1991 | AT | 130981 T | 15-12-1995 |
| | | DE | 69023918 D1 | 11-01-1996 |
| | | DE | 69023918 T2 | 23-05-1996 |
| | | DK | 497783 T3 | 09-04-1996 |
| | | EP | 0497783 A1 | 12-08-1992 |
| | | ES | 2080158 T3 | 01-02-1996 |
| | | JP | 3040813 B2 | 15-05-2000 |
| | | JP | 5500149 T | 14-01-1993 |
| JP 62171492 A | 28-07-1987 | JP | 1486755 C | 14-03-1989 |
| | | JP | 63034718 B | 12-07-1988 |
| US 5629598 A | 13-05-1997 | CA | 2142624 A1 | 08-12-1994 |
| | | EP | 0651922 A1 | 10-05-1995 |
| | | US | 5440219 A | 08-08-1995 |
| | | WO | 9428617 A1 | 08-12-1994 |
| US 3753002 A | 14-08-1973 | KEINE | | |

EPO FORM P0461

Für nähere Einzelheiten zu diesem Anhang : siehe Amtsblatt des Europäischen Patentamts, Nr.12/82